# FASCICULE DE BREVET EUROPEEN

(11) **EP 3 812 351 B1**
(45) Date de publication et mention de la délivrance du brevet: **09.02.2022**
(21) Numéro de dépôt: 20203383.3
(22) Date de dépôt: 22.10.2020
(51) Int. Cl.: C02F 9/00, B60R 15/00

(54) **SYSTÈME DE GESTION DE L'EAU POUR UN VÉHICULE, PROCÉDÉ CORRESPONDANT ET VÉHICULE ÉQUIPÉ D'UN TEL SYSTÈME**
WASSERHANDHABUNGSSYTEM FÜR EIN FAHRZEUG, ENTSPRECHENDES VERFAHREN UND FAHRZEUG MIT SOLCH EINEM SYSTEM
WATER MANAGEMENT SYSTEM FOR A VEHICLE, CORRESPONDING METHOD AND VEHICLE EQUIPPED WITH SUCH A SYSTEM

(30) Priorité: 24.10.2019 FR 1911928
(43) Date de publication de la demande: 28.04.2021
(73) Titulaire: ALSTOM Transport Technologies, 93400 Saint-Ouen (FR); WeCo, 94400 Vitry-sur-Seine (FR)
(72) Inventeur: VOISEUX, Denis, 93400 SAINT OUEN (FR); FAIVRE, Anthony, 78955 CARRIERES-SOUS-POISSY (FR); SAWADOGO, Hyacinthe, 95130 FRANCONVILLE (FR); MINEAU, Carine, 75015 PARIS (FR); DEKEUWER, Cécile, 42480 LA FOUILLOUSE (FR)
(74) Mandataire: Lavoix

(56) Documents cités:
- EP-A2- 1 690 789
- WO-A1-2004/110935
- FR-A1- 3 042 161

## Description

La présente invention concerne un système de gestion de l'eau pour un véhicule, notamment ferroviaire ou routier de transport en commun, notamment un bus ou un car, le système comprenant :
- un réservoir d'eau propre adapté pour délivrer de l'eau propre à au moins un lavabo du véhicule, et
- un réservoir d'eaux usées adapté pour recueillir, d'une part, des eaux grises en provenance du lavabo, et, d'autre part, des eaux noires en provenance de toilettes du véhicule, le réservoir d'eaux usées étant adapté pour réaliser un traitement des eaux grises et des eaux noires afin de produire un premier effluent traité, ledit traitement étant notamment bactériologique.

L'invention concerne aussi un procédé correspondant de gestion de l'eau dans un véhicule, notamment dans un véhicule ferroviaire ou dans un véhicule routier de transport en commun, ainsi qu'un véhicule équipé d'un tel système de gestion de l'eau.

Les véhicules ferroviaires de type inter cité (reliant entre elles des villes et/ou des zones périurbaines) comportent en général des cabines de toilettes équipées de toilettes et d'un lavabo alimentés à partir d'un réservoir d'eau propre. Les eaux grises en provenance du lavabo, et les eaux usées en provenance des toilettes sont par exemple recueillies dans un réacteur réalisant un traitement biologique (avec intervention de bactéries) dont l'objectif est de séparer les liquides des matières solides. Les matières solides sont filtrées et stockées, tandis que les liquides sont chauffés pour tuer les bactéries, puis en général rejetés sur la voie.

FR 3 042 161 divulgue un système de gestion de l'eau pour un véhicule, le système comprend un réservoir d'eau propre adapté pour délivrer de l'eau propre à au moins un lavabo du véhicule, et un réservoir d'eaux usées adapté pour recueillir, d'une part, des eaux grises en provenance du lavabo, et. d'autre part, des eaux noires en provenance de toilettes du véhicule, le réservoir d'eaux usées étant adapté pour réaliser un traitement des eaux grises et des eaux noires afin de produire un premier effluent traité, ledit traitement étant notamment bactériologique

Un tel système donne globalement satisfaction, mais la consommation d'eau propre et la consommation d'énergie par le système sont relativement élevées. En outre, les liquides rejetés sont trop corrosifs et sont susceptibles d'abîmer la caisse du véhicule lors de leurs rejets sur les voies. Leur qualité n'est pas satisfaisante notamment pour une application ferroviaire.

Un but de l'invention est donc de proposer un système de gestion de l'eau permettant de réduire la quantité d'eau et d'énergie consommée, toutes choses égales par ailleurs pour un utilisateur de la cabine de toilettes, c'est-à-dire notamment pour de mêmes quantités d'eau délivrées à l'utilisateur, l'eau étant de qualité comparable, voire meilleure, et en tout cas suffisante pour l'usage envisagé.

A cet effet, l'invention a pour objet un système de gestion de l'eau selon la revendication 1.

Selon des modes particuliers de réalisation, le système comprend l'une ou plusieurs des caractéristiques correspondant aux revendications 2 à 8, prise(s) isolément ou selon toutes les combinaisons techniquement possibles.

L'invention a aussi pour objet un véhicule selon la revendication 9.

L'invention a enfin pour objet un procédé selon la revendication 10.

L'invention sera mieux comprise à la lecture de la description qui va suivre, donnée uniquement à titre d'exemple et faite en se référant aux dessins annexés, sur lesquels :
la figure 1 est une vue schématique partielle d'un véhicule ferroviaire selon l'invention, équipé d'un système de gestion de l'eau selon l'invention,
la figure 2 est une vue schématique, en partie en perspective, d'un réacteur électrolytique représenté sur la figure 1, et
la figure 3 est une vue schématique, en élévation, du système représenté sur la figure 1.

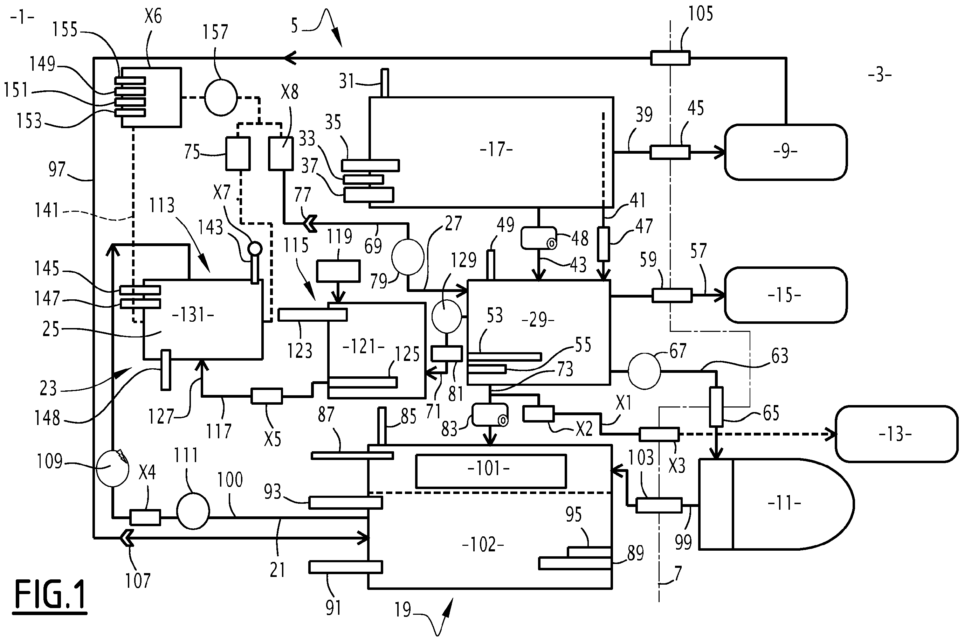

En référence à la figure 1, on décrit un véhicule 1 (non totalement représenté) selon l'invention. Le véhicule 1 est par exemple un véhicule ferroviaire, par exemple un train inter cité, reliant entre elles des villes et/ou des zones périurbaines.

En variante non représentée, le véhicule 1 est un véhicule routier de transport en commun, notamment un bus ou un car.

Le véhicule 1 comprend une cabine de toilettes 3, et un système 5 de gestion de l'eau utilisée dans la cabine de toilettes ou provenant de la cabine de toilettes.

La cabine de toilettes 3 est séparée du système 5 par une interface 7, par exemple une paroi de la cabine de toilettes 3.

La cabine de toilettes 3 comprend, dans l'exemple représenté, un lavabo 9, des toilettes 11 (un WC), et avantageusement deux trop-pleins 13, 15 respectivement adaptés pour recueillir d'éventuels trop-pleins d'eau traitée en provenance du système 5.

Selon une variante (non représentée), les trop-pleins 13, 15 ne sont pas situés dans la cabine de toilettes 3, mais ailleurs dans le véhicule ferroviaire 1.

Le système 5 est donc embarqué. Avantageusement, le système 5 occupe un volume parallélépipédique inférieur ou égal à 1700 litres, et possède une masse inférieure ou égale à 900 kg à vide.

Le système 5 comprend un réservoir d'eau propre 17 adapté pour délivrer de l'eau propre au lavabo 9. Lors du premier remplissage du réservoir d'eau propre 17, le réservoir d'eau traitée 29 est rempli par le biais d'une canalisation 41 ayant le rôle de surverse.

Par « eau propre », on entend une eau provenant de l'extérieur du véhicule 1, pas nécessairement potable, mais possédant une qualité suffisante pour qu'un utilisateur puisse l'utiliser pour se laver les mains.

Le système 5 comprend un réservoir d'eaux usées 19 adapté pour recueillir, d'une part, des eaux grises en provenance du lavabo 9, et, d'autre part, des eaux noires et des eaux traitées en provenance respectivement des toilettes 11 et du réservoir d'eau traitée 29, le réservoir d'eaux usées étant adapté pour réaliser un traitement bactériologique des eaux grises et des eaux noires afin de produire un premier effluent traité 21.

Le système 5 comporte aussi une unité de traitement électrochimique 23 adaptée pour recevoir le premier effluent traité 21 et le mélanger avantageusement avec de la saumure, c'est-à-dire une eau saturée en sel (notamment en chlorure de sodium) pour obtenir un mélange 25, et pour électrolyser le mélange afin de produire un second effluent traité 27. Le système 5 comporte également un réservoir d'eau traitée 29 adapté pour recevoir le second effluent traité 27, et optionnellement de l'eau propre en provenance du réservoir d'eau propre 17, et pour délivrer aux toilettes 11 de l'eau traitée comportant au moins le second effluent traité.

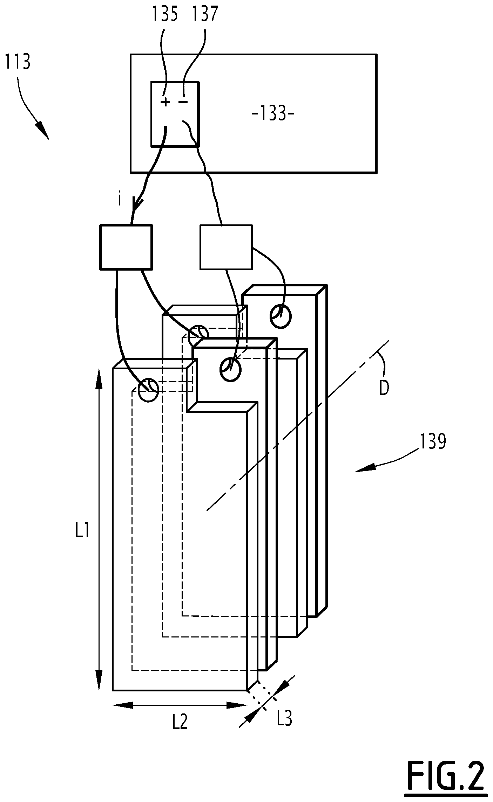

Le système 5 comprend aussi des canalisations servant à connecter certains des éléments précités entre eux. Il est à noter que, sur les figures 1 et 2, les canalisations et les flux qu'elles transportent sont confondus et représentés par un simple trait.

Le réservoir d'eau propre 17 comporte par exemple un évent 31, et une sonde de niveau 33. Le réservoir d'eau propre comporte aussi par exemple un capteur de pression 37.

Le réservoir d'eau propre 17 est connecté au lavabo 9 par une canalisation 39 pour délivrer l'eau propre, et par la canalisation 41 en direction du réservoir d'eau traitée 29 .

Le réservoir d'eau propre possède une capacité en eau propre par exemple comprise entre 100 et 300 litres, avantageusement égale à environ 200 litres.

Dans l'exemple représenté, le réservoir d'eau propre est connecté au réservoir d'eau traitée 29 par une canalisation 43 adaptée pour délivrer de l'eau propre sélectivement au réservoir d'eau traitée.

L'évent 31 est adapté pour éviter une surpression dans le réservoir d'eau propre.

La sonde de niveau 33 est par exemple adaptée pour détecter une baisse de niveau dans le réservoir d'eau propre, par exemple en-dessous de 10% de sa capacité nominale, ici de 200 litres.

Le capteur de pression 37 est configuré la pression régnant en un point donné du réservoir d'eau propre donnant ainsi une information sur son niveau de remplissage.

Les canalisations 39 et 41 sont par exemple pourvues de connexions mâle/femelle 45 et 47.

La canalisation 43 est avantageusement pourvue d'une électrovanne 48.

Le réservoir d'eau traitée 29 comprend un évent 49, un capteur de pression 53. Le réservoir d'eau traitée 29 comprend aussi une sonde de niveau 55.

Le réservoir d'eau traitée 29 possède avantageusement une capacité comprise entre 50 et 150 litres, par exemple égale à environ 100 litres.

Le réservoir d'eau traitée 29 est connecté au trop-plein 15 par une canalisation 57, avantageusement pourvue d'une connexion mâle/femelle 59.

Le réservoir d'eau traitée 29 est connecté respectivement au réservoir d'eau usées 19 et au trop plein 13 par des canalisations 73 et X1, avantageusement pourvues d'électrovannes 83 et X2 respectivement.

La canalisation X1 est par exemple pourvue d'une connexion mâle femelle X3.

Le réservoir d'eau traitée 29 est connecté aux toilettes 11 par une canalisation 63, avantageusement pourvue d'une connexion mâle/femelle 65 et d'un filtre 67, et adaptée pour délivrer de l'eau traitée aux toilettes 11.

Le réservoir d'eau traitée 29 est connecté à l'unité de traitement électrochimique 23 par une canalisation 69 adaptée pour véhiculer le second effluent traité 27 depuis l'unité de traitement électrochimique 23 jusqu'au réservoir d'eau traitée 29.

Le réservoir d'eau traitée 29 est connecté au réservoir de saumure 115 par une canalisation 71, avantageusement pourvue d'une pompe adaptée pour délivrer de l'eau au réservoir de de saumure 121.

Le réservoir d'eau traitée 29 est aussi connecté au réservoir d'eaux usées 19 par une canalisation 73 adaptée pour délivrer de l'eau au réservoir d'eaux usées 19 en provenance du réservoir d'eau traitée 29.

L'évent 49 est adapté pour éviter une surpression dans le réservoir d'eau traitée 29.

Le capteur de pression 53 est adapté pour fournir la pression en un point donné du réservoir d'eau traitée donnant ainsi une information sur son niveau de remplissage.

La sonde de niveau 55 est par exemple configurée pour détecter un niveau minimal dans le réservoir d'eau traitée, le niveau minimal étant par exemple égal à environ 10% de la capacité du réservoir d'eau traitée.

La canalisation 69 est par exemple équipée d'une électrovanne X8, d'un clapet anti-retour 77 et d'un filtre 79.

La canalisation 71 est équipée par exemple d'une pompe 129 et d'une électrovanne 81.

Le réservoir d'eaux usées 19 comprend par exemple un évent 85, une sonde de niveau 87 flottante, un capteur de température 89, et un capteur de pression 91. Le réservoir d'eaux usées comprend par exemple un capteur de turbidité 93 et un capteur de pH 95.

Le réservoir d'eaux usées 19 est connecté au lavabo 9 par une canalisation 97 adaptée pour conduire les eaux grises en provenance du lavabo jusqu'au réservoir d'eaux usées. Le réservoir d'eaux usées est également connecté aux toilettes 11 par une canalisation 99 adaptée pour conduire les eaux noires en provenance des toilettes jusqu'au réservoir d'eaux usées.

Le réservoir d'eaux usées 19 est connecté à l'unité de traitement électrochimique 23 par une canalisation 100 adaptée pour conduire le premier effluent traité 21 depuis le réservoir d'eaux usées jusqu'à l'unité de traitement électrochimique.

Le réservoir d'eaux usées comprend avantageusement un compartiment de filtration 101 adapté pour séparer les matières solides des liquides dans les eaux usées en provenance des toilettes 11, et un compartiment de traitement bactériologique 102 adapté pour réaliser un traitement bactériologique des eaux grises et des eaux usées.

L'évent 85 est adapté pour éviter une surpression dans le réservoir d'eaux usées.

La sonde de niveau 87 est configurée pour indiquer le niveau maximum du réservoir d'eaux usées.

Le capteur de température 89, le capteur de turbidité 93 et le capteur de pH 95 sont respectivement adaptés pour fournir la température, la turbidité et le pH du liquide dans le compartiment 102, après filtration dans le compartiment 101.

Le capteur de pression 91 est adapté pour fournir la pression en un point déterminé du réservoir d'eaux usées.

La canalisation 99 est avantageusement pourvue d'une connexion mâle/femelle 103.

La canalisation 97 comprend avantageusement une connexion mâle/femelle 105 et un clapet anti-retour 107.

La canalisation 100 comprend par exemple une pompe 109, un filtre 111 et une électrovanne X4.

L'unité de traitement électrochimique 23 comprend un réacteur électrolytique 113 adapté pour recevoir le mélange 25 et produire le second effluent traité 27, et une source de saumure 115 adaptée pour délivrer une saumure 117, l'unité de traitement électrochimique 23 étant adaptée pour mélanger la saumure 117 et le premier effluent traité 21 afin de produire le mélange 25.

L'unité de traitement électrochimique 23 comprend par exemple une chambre de mesure X6.

La source de saumure 115 comprend un réservoir de sel 119 et un réservoir de saumure 121.

La saumure 117 est par exemple une solution d'eau salée saturée en sel à 260g/litre à 0°C.

Le réservoir de sel 119 est adapté pour envoyer du sel dans le réservoir de saumure 121.

Le réservoir de saumure 121 possède une capacité avantageusement comprise entre 25 et 75 litres de saumure, par exemple égale à environ 50 litres.

Le réservoir de saumure comprend une sonde de niveau 123 flottante, et un détecteur 125 de présence de sel.

Le réservoir de saumure est connecté à la canalisation 71 pour recevoir de l'eau en provenance du réservoir d'eau traitée 29. Le réservoir de saumure est également connecté au réacteur électrolytique 113 par une canalisation 127 adaptée pour conduire la saumure 117 depuis le réservoir de saumure jusqu'au réacteur électrolytique 113.

La canalisation 127 est avantageusement équipée d'une électrovanne X5 configurée pour doser la quantité de saumure 117 envoyée dans le réacteur électrolytique 113.

Le réacteur électrolytique 113 comprend un réservoir de mélange 131 adapté pour contenir le mélange 25, une source de tension 133 (figure 2) ayant un pôle positif, ou anode, 135 et un pôle négatif, ou cathode, 137, et une pluralité de plaques 139 situées dans le réservoir de mélange 131 et formant des électrodes (alternance de cathodes et d'anodes).

Le réacteur électrolytique 113 comprend avantageusement une boucle de recirculation 141 adaptée pour extraire une partie du mélange 25 du réservoir de mélange 131, et pour réinjecter au moins une fraction de cette partie dans le réservoir de mélange après un passage dans la chambre de mesure X6.

Le réservoir de mélange 131 possède une capacité avantageusement comprise entre 10 et 40 litres, par exemple égale à environ 20 litres. Le réservoir de mélange 131 comporte un évent 143, des sondes de niveau 145, 147, et d'un capteur de pression 148 adapté pour fournir une mesure continue. En variante, le capteur de pression 148 se situe dans la chambre de mesure X6.

Le réservoir de mélange 131 est par exemple directement connecté à la canalisation 127 pour recevoir la saumure 117.

Selon une variante non représentée, la canalisation 127 rejoint la canalisation 100 en amont du réservoir de mélange 131.

La chambre de mesure X6 comprend par exemple un capteur de température 149, un capteur de conductivité 151, un capteur de pH 153, et un capteur de potentiel Redox 155. La chambre de mesure X6 est par exemple directement connectée en amont au réservoir de mélange 131 par la boucle de recirculation 141. En variante, la chambre de mesure X6 comprend le capteur de pression 148.

L'évent 143 est adapté pour éviter une surpression dans le réservoir de mélange 131. De plus l'évent 143 est équipé d'une ventilation ATEX adaptée X7 pour évacuer des gaz explosifs éventuellement présents dans le réservoir 131.

Les sondes de niveau 145, 147 sont adaptées pour détecter des niveaux de mélange 25 dans le réservoir de mélange 131 correspondant, par exemple, respectivement à 100%et 80% de la capacité nominale du réservoir de mélange 131.

Le capteur de température 149, le capteur de conductivité 151, le capteur de pH 153 et le capteur de potentiel Redox 155 sont respectivement configurés pour fournir la température, la conductivité, le pH et le potentiel Redox du mélange 25 dans la chambre de mesure X6.

La boucle de recirculation 141 comprend une pompe de recirculation 157 adaptée pour créer une recirculation au sein du réservoir de mélange 131.

La boucle de recirculation comprend aussi une électrovanne 75 située entre la pompe de recirculation 157 et le réservoir de mélange 131.

La pompe de recirculation 157 est par exemple connectée en amont à la chambre de mesure X6.

Dans l'exemple représenté, la canalisation 69 est connectée, en amont, à la boucle de recirculation 141, par exemple en aval de la pompe de recirculation 157.

Les électrovannes 75 et X8 sont respectivement adaptées pour envoyer le mélange 25 pompé par la pompe de recirculation 157 intégralement vers le réservoir de mélange 131, et pour envoyer le mélange 25 pompé par la pompe de recirculation 57 vers le réservoir d'eau traitée 29 via la canalisation 69.

Selon une variante non représentée, la canalisation 69 est connectée directement au réservoir de mélange 131. La canalisation 69 comprend alors éventuellement sa propre pompe pour alimenter le réservoir d'eau traitée 29 en eau traitée.

Les plaques 139, visibles sur la figure 2, sont par exemple parallèles les unes aux autres. Certaines des plaques 139 sont connectées à l'anode 135, tandis que d'autres plaques 139 sont connectées à la cathode 137. Avantageusement, les plaques 139 connectées à l'anode alternent avec les plaques 139 connectées à la cathode selon une direction D sensiblement perpendiculaire aux plaques 139.

Les plaques 139, visibles sur la figure 2, sont séparées par une distance avantageusement comprise entre 2 et 4 mm soit par exemple 3 mm.

La source de tension 133 est par exemple apte à délivrer une tension fixe de quelques volts, comprise entre 3 et 5 volts et avantageusement égale à environ 3,5 volts.

Les plaques 139 sont avantageusement de formes analogues les unes aux autres, mais leurs matériaux peuvent différer. Les plaques 139 possèdent par exemple une longueur L1 comprise entre 250 et 750 mm, par exemple égale à environ 570 mm.

Les plaques 139 possèdent une largeur L2 avantageusement comprise entre 100 et 300 mm, par exemple égale à environ 230 mm.

Les plaques 139 possèdent une épaisseur L3 avantageusement comprise entre 0,5 et 2 mm, par exemple égale à environ 1 mm.

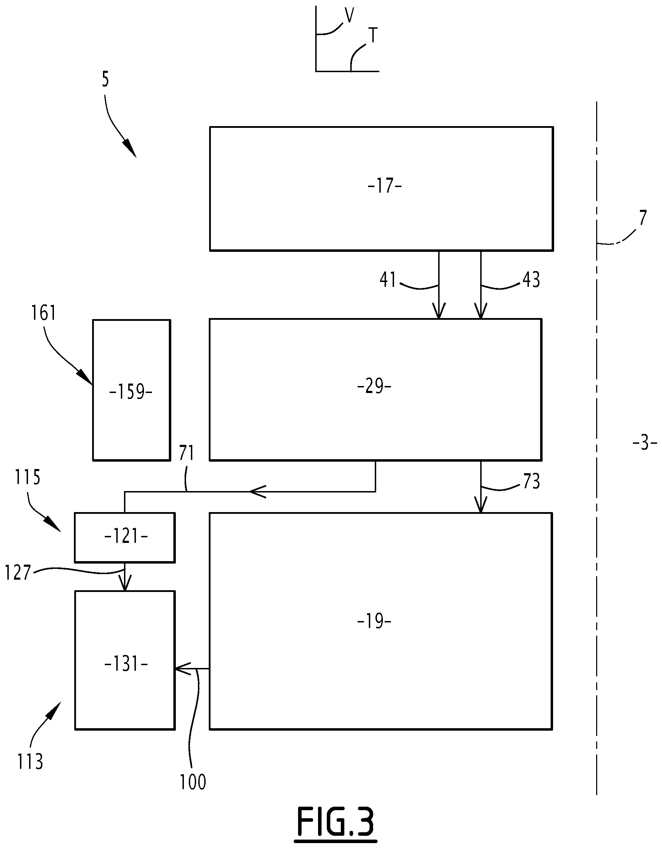

Le système 5 comprend avantageusement une unité de commande 159 (figure 3) reliée aux capteurs du système 5 et adaptée pour commander les pompes 109 et 129, ainsi que la pompe de recirculation 157 et les électrovannes 48, 75, 81 et 83.

L'unité de commande 159 comprend par exemple un panneau électrique 161.

Comme visible sur la figure 3, sur laquelle une direction V sensiblement verticale est représentée, le réservoir d'eau propre 17 est avantageusement situé au-dessus du réservoir d'eau traitée 29, lui-même situé au-dessus du réservoir de saumure 121. Le réservoir de saumure 121 est par exemple situé au-dessus du réservoir de mélange 131.

Le réservoir d'eau traitée 29 est par exemple situé au-dessus du réservoir d'eaux usées 19 qui est avantageusement sensiblement au même niveau que le réservoir de mélange 131 selon la direction V.

Cette disposition avantageuse permet de faciliter les écoulements dans les canalisations 43, 71, 73, 100 et 127, et minimise l'énergie de pompage.

Les connexions 45, 47, 59, 65 et 103 sont avantageusement situées au niveau de l'interface 7 et permettent une connexion et une déconnexion faciles du système 5.

Pour des questions d'accessibilité, et de facilité de la maintenance, le panneau électrique 161, la source de saumure 115 et le réacteur électrolytique 113 sont situés du côté opposé à la cabine de toilettes 3 selon une direction transversale T sensiblement perpendiculaire à la direction V, tandis que le réservoir d'eau propre 17, le réservoir d'eau traitée 29, et le réservoir d'eaux usées 19 sont situés de l'autre côté selon la direction transversale T.

Le fonctionnement de la cabine de toilettes 3 et du système 5 de gestion de l'eau va maintenant être décrit.

Le système 5 est monté derrière l'interface 7 par rapport à la cabine de toilettes 3.

Grâce à la connexion 45, le lavabo 9 est connecté au réservoir d'eau propre 17. Grâce aux connexions 47, 59, le réservoir d'eau propre 17 et le réservoir d'eau traitée 29 sont connectés respectivement aux trop-pleins 13 et 15.

Les toilettes 11 sont connectées au réservoir d'eau traitée 29 grâce à la connexion 65, et au réservoir d'eaux usées 19 grâce à la connexion 103.

Le réservoir d'eau propre 17 est approvisionné en eau propre. Dans une phase de démarrage, alors qu'il n'existe pas encore d'eau traitée dans le réservoir d'eau traitée 29, de l'eau propre est admise directement dans le réservoir d'eau traitée 29 via le trop plein 41. L'eau alors présente dans le réservoir d'eau traitée 29 peut servir dans les toilettes 11 via la canalisation 63.

Elle sert également à alimenter en eau le réservoir de saumure 121 via la canalisation 71 en ouvrant l'électrovanne 81. Du sel en provenance du réservoir 119 est ajouté à cette eau pour fabriquer la saumure 117 dans le réservoir de saumure 121.

La sonde de niveau 123 permet d'assurer un niveau correct dans le réservoir de saumure 121. Le détecteur 125 permet de vérifier la présence de sel et de contrôler que la salinité de la saumure 117 est suffisante.

Le fonctionnement normal du système 5 peut alors commencer.

En fonctionnement normal, le lavabo 9 reçoit de l'eau propre en provenance du réservoir d'eau propre 17 via la canalisation 39. Après utilisation, cette eau propre devient de l'eau grise et est envoyée au réservoir d'eaux usées 19 via la canalisation 97. Le clapet anti-retour 107 évite un retour des eaux usées depuis le réservoir d'eaux usées 19 vers le lavabo 9.

En cas de trop-plein d'eau dans le réservoir d'eau propre 17, le trop-plein s'écoule via la canalisation 41 vers le trop-plein 13.

L'évent 31 évite une surpression dans le réservoir d'eau propre 17. La sonde de niveau 33 permet de savoir quand le réservoir d'eau propre 17 est presque vide. Le capteur de pression 37 fournit la pression régnant dans le réservoir d'eau propre 17.

Le réservoir d'eau traitée 29 reçoit le second effluent traité 27 en provenance de l'unité de traitement électrochimique 23 via la canalisation 27. Le clapet anti-retour 77 évite avantageusement tout retour d'eau traitée vers l'unité de traitement électrochimique 23. Le second effluent traité 27 est avantageusement filtré par le filtre 79 avant d'arriver dans le réservoir d'eau traitée.

L'évent 49 évite toute surpression dans le réservoir d'eau traitée. En cas de trop-plein, l'électrovanne 61 est ouverte pour permettre un écoulement d'eau vers le trop-plein 15 via la canalisation 57.

Le réservoir d'eau traitée 29 alimente les toilettes 11 via la canalisation 63. L'eau traitée délivrée aux toilettes est avantageusement filtrée par le filtre 67.

Pour préparer la saumure 117, le réservoir d'eau traitée 29 alimente en eau le réservoir de saumure 121 via la canalisation 71, après activation de l'électrovanne 81 et de la pompe 129.

Si la sonde de niveau 55 détecte que la quantité d'eau traitée dans le réservoir d'eau traitée 29 est passée en dessous du niveau minimal, l'électrovanne 48 est ouverte pour admettre de l'eau propre dans le réservoir d'eau traitée en provenance du réservoir d'eau propre 17 via la canalisation 43.

Le capteur de pression 53 fournit la pression du réservoir d'eau traitée 29.

Les eaux usées en provenance des toilettes 11 arrivent dans le compartiment de filtration 101 du réservoir d'eaux usées 19 via la canalisation 99. Dans ce compartiment, les matières solides sont séparées du liquide, et le liquide arrive dans le compartiment de traitement bactériologique 102.

Avantageusement, pour réguler, ou pour nettoyer, de l'eau en provenance du réservoir d'eau traitée 29 est admise dans le réservoir d'eaux usées via la canalisation 73 en ouvrant l'électrovanne 83. Ceci permet par exemple de drainer le compartiment de filtration 101.

Un traitement bactériologique est réalisé dans le compartiment de traitement bactériologique 102.

L'évent 85 évite toute surpression dans le réservoir d'eaux usées 19.

Le niveau maximum du réservoir d'eaux usées est mesuré par la sonde de niveau 87.

La température, la pression, la turbidité et le pH dans le compartiment de traitement bactériologique 102 sont mesurés respectivement par les capteurs de température 89, de pression 91, de turbidité 93 et de pH 95. Le premier effluent traité 21 est envoyé dans le réservoir de mélange 131 via la canalisation 100. Ceci est par exemple réalisé de manière discontinue en actionnant la pompe 109 et l'électrovanne X4. Le filtre 111 filtre le premier effluent traité 21 afin d'éviter l'apport de particules organiques qui perturberait le traitement.

La saumure 117 est fabriquée en tant que de besoin dans le réservoir de saumure 121 en admettant de l'eau en provenance du réservoir d'eau traitée 29 via la canalisation 71 d'une part, et du sel en provenance du réservoir 119 d'autre part.

Le réservoir de mélange 131 reçoit le premier effluent traité 21 et la saumure 117 qui se mélangent pour former le mélange 25.

Le niveau du mélange 25 dans le réacteur de mélange 131 est contrôlé grâce aux sondes de niveau 145, 147, et au capteur 148.

L'électrovanne X5 permet de doser la quantité de saumure injectée dans le réservoir de mélange 131 par rapport à la quantité de premier effluent traité 21.

Pour réaliser l'électrolyse dans le réacteur électrolytique 113, les plaques 139 sont mises en tension grâce à la source de tension 133. Les plaques 139 agissent alors comme des électrodes et l'électrolyse du mélange 25 est réalisée.

L'électrolyse permet de purifier et de décolorer le mélange 25.

La pompe de recirculation 157 assure une recirculation du mélange 25 dans la boucle de recirculation 141 afin d'obtenir un brassage du mélange 25 dans le réservoir de mélange 131.

L'évent 143 évite une surpression dans le réservoir de mélange 131.

Les capteurs 149, 151, 153 et 155 fournissent respectivement la température, la conductivité, le pH et le potentiel Redox du mélange 25 et permettent un contrôle de la réaction d'électrolyse à travers de la chambre de mesure X6.

Lorsque l'électrolyse est terminée, l'électrovanne 75 change de position et se ferme. L'électrovanne X8 envoie le mélange 25 vers le réservoir d'eau traitée 29 via la canalisation 69. Après filtrage par le filtre 79, le mélange 25 forme le second effluent traité 27.

Avantageusement le clapet anti-retour 77 évite tout retour de l'eau traitée vers le réacteur électrolytique 113. Avantageusement, le réacteur électrolytique 113 fonctionne de manière discontinue, c'est-à-dire uniquement lorsque le réservoir de mélange 131 est suffisamment rempli. Un cycle d'électrolyse dure avantageusement quelques heures, par exemple environ deux heures.

Avantageusement, la quantité de sel utilisée est comprise entre 3 et 7 grammes/litre de premier effluent traité 21, et par exemple égale à environ 5 grammes/litre. Une quantité correspondante de saumure 117 est par exemple injectée dans le réservoir de mélange 131 au début de chaque cycle.

Avantageusement, au début de l'électrolyse, une rampe de tension est appliquée aux plaques 139 depuis une valeur initiale jusqu'à une valeur finale qui est ensuite maintenue jusqu'à la fin de l'électrolyse. Par exemple, la tension entre l'anode 135 et la cathode 137 est initialement d'environ 2,0 volts et passe progressivement à environ 3,5 volts, par exemple en environ une minute.

Avantageusement, l'intensité i délivrée par la source de tension 133 dans chacune des plaques 139 reliées à l'anode 135 est inférieure ou égale à 60 A.

Grâce aux caractéristiques ci-dessus, la quantité d'eau consommée par le système 5 est réduite grâce au recyclage dans le réservoir d'eau traitée 29 de l'eau utilisée dans le lavabo 9 et les toilettes 11.

En outre, grâce à la canalisation 73, la quantité d'eau dans le réservoir d'eaux usées 19 est ajustable de manière à régler le ratio entre matières solides et liquide dans le réservoir, ce qui améliore l'efficacité du traitement bactériologique.

Optionnellement, le filtre 67 permet encore d'améliorer la qualité de l'eau traitée livrée aux toilettes 11.

Le réacteur électrolytique 113 réalise une purification et une décoloration efficace du premier effluent traité 21 afin d'obtenir le second effluent traité 27.

La boucle de recirculation 41 permet d'améliorer l'efficacité du réacteur électrolytique 113 grâce à un brassage du mélange 25.

Les capteurs dont est doté le réservoir de mélange 131 permettent de réguler et d'optimiser la réaction d'électrolyse.

Grâce aux caractéristiques décrites ci-dessus, la fréquence de drainage du réservoir d'eaux usées est réduite, par exemple d'environ tous les trois jours à tous les trois mois.

## Revendications

1. Système (5) de gestion de l'eau pour un véhicule (1), notamment ferroviaire ou routier de transport en commun, notamment un bus ou un car, le système (5) comprenant :
- un réservoir d'eau propre (17) adapté pour délivrer de l'eau propre à au moins un lavabo (9) du véhicule (1), et
- un réservoir d'eaux usées (19) adapté pour recueillir, d'une part, des eaux grises en provenance du lavabo (9), et, d'autre part, des eaux noires en provenance de toilettes (11) du véhicule (1), le réservoir d'eaux usées (19) étant adapté pour réaliser un traitement des eaux grises et des eaux noires afin de produire un premier effluent traité (21), ledit traitement étant notamment bactériologique,
**caractérisé en ce qu'**il comporte en outre :
- une unité de traitement électrochimique (23) adaptée pour recevoir le premier effluent traité (21) et mélanger le premier effluent traité (21) avec au moins du sel afin d'obtenir un mélange (25), et pour électrolyser le mélange (25) afin de produire un second effluent traité (27), et
- un réservoir d'eau traitée (29) adapté pour recevoir le second effluent traité (27), et optionnellement de l'eau propre en provenance du réservoir d'eau propre (17), et pour délivrer aux toilettes (11) de l'eau traitée comportant au moins le second effluent traité (27).

2. Système (5) selon la revendication 1, dans lequel l'unité de traitement électrochimique (23) comprend :
- au moins une source de saumure (115) adaptée pour délivrer une saumure (117), l'unité de traitement électrochimique (23) étant adaptée pour mélanger la saumure (117) et le premier effluent traité (21) pour produire le mélange (25), et
- au moins un réacteur électrolytique (113) adapté pour recevoir le mélange (25) et produire le second effluent traité (27).

3. Système (5) selon la revendication 2, dans lequel la source de saumure (115) comprend :
- un réservoir de sel (119), et
- un réservoir de saumure (121) connecté au réservoir d'eau traitée (29) et/ou au réservoir d'eau propre (17) pour recevoir de l'eau traitée et/ou de l'eau propre (17), et au réservoir de sel (119) pour recevoir du sel.

4. Système (5) selon la revendication 2 ou 3, dans lequel le réacteur électrolytique (113) comprend :
- au moins un réservoir de mélange (131) adapté pour contenir le mélange (25),
- au moins une source de tension (133) ayant une anode (135) et une cathode (137), et
- une pluralité de plaques (139) parallèles les unes aux autres, certaines des plaques (139) étant connectées électriquement à l'anode (135), et certaines autres des plaques (139) étant connectées électriquement à la cathode (137).

5. Système (5) selon la revendication 4, dans lequel le réacteur électrolytique (113) comprend une boucle de recirculation (141) adaptée pour extraire une partie du mélange (25) du réservoir de mélange (131), et pour réinjecter au moins une fraction de ladite partie du mélange (25) dans le réservoir de mélange (131).

6. Système (5) selon la revendication 5, comprenant une canalisation (69) connectée, en amont, à la boucle de recirculation (141) et, en aval, au réservoir d'eau traitée (29), la canalisation (69) étant adaptée pour acheminer le deuxième effluent traité (27) depuis l'unité de traitement électrochimique (23) vers le réservoir d'eau traitée (29).

7. Système (5) selon l'une quelconque des revendications 2 à 6, dans lequel l'unité de traitement électrochimique (23) comprend en outre une chambre de mesure (X6) reliée au réacteur électrolytique (113) et comportant un ou plusieurs des éléments suivants :
- un capteur de potentiel Redox (155) du mélange (25),
- un capteur de pH (153) du mélange (25),
- un capteur de conductivité (151) du mélange (25), et
- un capteur de température (149) du mélange (25),
la chambre de mesure (X6) comprenant de préférence un capteur de pression (148).

8. Système (5) selon l'une quelconque des revendications 1 à 7, dans lequel le réservoir d'eaux usées (19) comprend :
- au moins un compartiment de filtration (101) adapté pour recevoir les eaux noires en provenance des toilettes (11), et de l'eau traitée en provenance du réservoir d'eau traitée (29), et pour retenir des résidus non liquides présents dans les eaux noires, et
- au moins un compartiment de traitement bactériologique (102) adapté pour recevoir l'eau grise, et les eaux usées débarrassées desdits résidus non liquides, et pour réaliser ledit traitement bactériologique.

9. Véhicule (1), notamment ferroviaire ou routier de transport en commun, notamment un bus ou un car, comprenant :
- une cabine de toilettes (3) comportant des toilettes (11) et au moins un lavabo (9),
- au moins un système (5) selon l'une quelconque des revendications 1 à 8.

10. Procédé de gestion de l'eau dans un véhicule (1), notamment ferroviaire ou routier de transport en commun, notamment un bus ou un car, comprenant les étapes suivantes :
- livraison d'eau propre depuis un réservoir d'eau propre (17) à au moins un lavabo (9) du véhicule (1),
- réception dans un réservoir d'eaux usées (19), d'une part, d'eaux grises en provenance du lavabo (9), et, d'autre part, d'eaux noires en provenance de toilettes (11) du véhicule (1),
- dans le réservoir d'eaux usées (19), traitement, notamment bactériologique, des eaux grises et des eaux noires afin de produire un premier effluent traité (21),
- dans une unité de traitement électrochimique (23), réception du premier effluent traité (21), mélange du premier effluent traité (21) avec au moins du sel afin d'obtenir un mélange (25), et électrolyse du mélange (25) afin de produire un second effluent traité (27), et
- dans le réservoir d'eau traitée (29), réception du second effluent traité (27), et optionnellement d'eau en provenance du réservoir d'eau propre (17), et livraison d'eau traitée aux toilettes (11), l'eau traitée comportant au moins le second effluent traité (27).

## Patentansprüche

1. System (5) für Wassermanagement für ein Fahrzeug (1), insbesondere Schienen- oder Straßentransportfahrzeug des öffentlichen Verkehrs, insbesondere einen Bus oder Reisebus, das System (5) umfassend:
- einen Frischwassertank (17), der angepasst ist, um Frischwasser an mindestens ein Waschbecken (9) des Fahrzeugs (1) bereitzustellen, und
- einen Brauchwasserbehälter (19), der angepasst ist, um einerseits Grauwasser aus dem Waschbecken (9) und andererseits Schwarzwasser aus der Toilette (11) des Fahrzeugs (1) aufzunehmen, wobei der Brauchwasserbehälter (19) angepasst ist, um eine Behandlung des Grauwassers und des Schwarzwassers durchzuführen, um ein erstes behandeltes Abwasser (21) zu erzeugen, wobei die Behandlung insbesondere bakteriologisch ist,
**dadurch gekennzeichnet, dass** es ferner Folgendes umfasst:
- eine elektrochemische Behandlungseinheit (23), die angepasst ist, um das erste behandelte Abwasser (21) aufzunehmen und das erste behandelte Abwasser (21) mit mindestens Salz zu mischen, um ein Gemisch (25) zu erlangen, und das Gemisch (25) zu elektrolysieren, um ein zweites behandeltes Abwasser (27) zu erzeugen, und
- einen Behälter für behandeltes Wasser (29), der angepasst ist, um das zweite behandelte Abwasser (27) und optional sauberes Wasser aus dem Behälter für sauberes Wasser (17) aufzunehmen und um der Toilette (11) behandeltes Wasser bereitzustellen, das mindestens das zweite behandelte Abwasser (27) umfasst.

2. System (5) nach Anspruch 1, wobei die elektrochemische Verarbeitungseinheit (23) Folgendes umfasst:
- mindestens eine Solequelle (115), die angepasst ist, um eine Sole (117) bereitzustellen, wobei die elektrochemische Behandlungseinheit (23) angepasst ist, um die Sole (117) und das erste behandelte Abwasser (21) zu mischen, um das Gemisch (25) zu erzeugen, und
- mindestens einen Elektrolytreaktor (113), der angepasst ist, um das Gemisch (25) aufzunehmen und das zweite behandelte Abwasser (27) zu erzeugen.

3. System (5) nach Anspruch 2, wobei die Solequelle (115) Folgendes umfasst:
- einen Salzbehälter (119), und
- einen Solebehälter (121), der mit dem Behälter für behandeltes Wasser (29) und/oder dem Behälter für sauberes Wasser (17) verbunden ist, um behandeltes Wasser und/oder sauberes Wasser (17) aufzunehmen, und mit dem Salzbehälter (119), um Salz aufzunehmen.

4. System (5) nach Anspruch 2 oder 3, wobei der Elektrolytreaktor (113) Folgendes umfasst:
- mindestens einen Mischbehälter (131), der angepasst ist, um das Gemisch (25) zu enthalten,
- mindestens eine Spannungsquelle (133), die eine Anode (135) und eine Kathode (137) aufweist, und
- eine Vielzahl von Platten (139), die parallel zueinander sind, wobei gewisse der Platten (139) elektrisch mit der Anode (135) verbunden sind und gewisse andere der Platten (139) elektrisch mit der Kathode (137) verbunden sind.

5. System (5) nach Anspruch 4, wobei der Elektrolytreaktor (113) eine Umwälzschleife (141) umfasst, die angepasst ist, um einen Teil des Gemischs (25) aus dem Mischbehälter (131) zu entnehmen und mindestens eine Fraktion des Teils des Gemischs (25) wieder in den Mischbehälter (131) einzuleiten.

6. System (5) nach Anspruch 5, umfassend eine Rohrleitung (69), die stromaufwärts mit der Umwälzschleife (141) und stromabwärts mit dem Behälter für behandeltes Wasser (29) verbunden ist, wobei die Rohrleitung (69) angepasst ist, um das zweite behandelte Abwasser (27) von der elektrochemischen Behandlungseinheit (23) zu dem Behälter für behandeltes Wasser (29) zu leiten.

7. System (5) nach einem der Ansprüche 2 bis 6, wobei die elektrochemische Behandlungseinheit (23) ferner eine Messkammer (X6) umfasst, die mit dem Elektrolytreaktor (113) verbunden ist und eines oder mehrere der folgenden Elemente umfasst:
- einen Redoxpotenzial-Sensor (155) des Gemischs (25),
- einen pH-Sensor (153) des Gemischs (25),
- einen Leitfähigkeitssensor (151) des Gemischs (25) und
- einen Temperatursensor (149) des Gemischs (25),
die Messkammer (X6) umfassend vorzugsweise einen Drucksensor (148).

8. System (5) nach einem der Ansprüche 1 bis 7, wobei der Brauchwasserbehälter (19) Folgendes umfasst:
- mindestens eine Filterkammer (101), die angepasst ist, um von der Toilette (11) stammendes Schwarzwasser und aus dem Behälter für behandeltes Wasser (29) stammendes behandeltes Wasser aufzunehmen, und um nicht-flüssige Rückstände, die in dem Schwarzwasser vorhanden sind, zurückzuhalten, und
- mindestens eine bakteriologische Behandlungskammer (102), die angepasst ist, um das Grauwasser und das von den nicht-flüssigen Rückständen befreite Brauchwasser aufzunehmen, und um die bakteriologische Behandlung durchzuführen.

9. Fahrzeug (1), insbesondere Schienen- oder Straßentransportfahrzeug des öffentlichen Verkehrs, insbesondere einen Bus oder Reisebus, umfassend:
- eine Toilettenkabine (3), umfassend eine Toilette (11) und mindestens ein Waschbecken (9),
- mindestens ein System (5) nach einem der Ansprüche 1 bis 8.

10. Verfahren zum Wassermanagement in einem Fahrzeug (1), insbesondere einem Schienen- oder Straßenfahrzeug des öffentlichen Verkehrs, insbesondere einem Bus oder Reisebus, umfassend die folgenden Schritte:
- Bereitstellen von sauberem Wasser aus einem Frischwasserbehälter (17) an mindestens ein Waschbecken (9) in dem Fahrzeug (1),
- Aufnehmen in einem Brauchwasserbehälter (19) einerseits von Grauwasser aus dem Waschbecken (9) und andererseits von Schwarzwasser aus der Toilette (11) des Fahrzeugs (1),
- in dem Brauchwasserbehälter (19), Behandeln, insbesondere bakteriologisches Behandeln, des Grauwassers und Schwarzwassers, um ein erstes behandeltes Abwasser (21) zu erzeugen,
- in einer elektrochemischen Behandlungseinheit (23), Erhalten des ersten behandelten Abwassers (21), Mischen des ersten behandelten Abwassers (21) mit mindestens Salz, um ein Gemisch (25) zu erlangen, und Elektrolysieren des Gemischs (25), um ein zweites behandeltes Abwasser (27) zu erzeugen, und
- in dem Behälter für behandeltes Wasser (29), Erhalten des zweiten behandelten Abwassers (27) und optional von Wasser aus dem Frischwasserbehälter (17) und Bereitstellen des behandelten Wassers an die Toiletten (11), wobei das behandelte Wasser mindestens das zweite behandelte Abwasser (27) umfasst.

## Claims

1. Water management system (5) for a vehicle (1), in particular a public transport rail or road vehicle, in particular a bus or coach, the system (5) comprising:
- a clean water tank (17) designed to deliver clean water to at least one sink (9) of the vehicle (1), and
- a waste water tank (19) designed to collect, on the one hand, gray water from the sink (9), and, on the other hand, black water from the toilet (11) of the vehicle (1), the waste water tank (19) being designed to carry out a treatment of gray water and black water in order to produce a first treated effluent (21), said treatment being in particular bacteriological,
**characterized in that** it further comprises:
- an electrochemical treatment unit (23) suitable for receiving the first treated effluent (21) and mixing the first treated effluent (21) with at least salt in order to obtain a mixture (25), and for electrolyzing the mixture (25) in order to produce a second treated effluent (27), and
- a treated water tank (29) designed to receive the second treated effluent (27), and optionally clean water from the clean water tank (17), and to deliver to the toilet (11) the treated water comprising at least the second treated effluent (27).

2. System (5) according to claim 1, wherein the electrochemical treatment unit (23) comprises:
- at least one source of brine (115) designed to deliver a brine (117), the electrochemical treatment unit (23) being designed to mix the brine (117) and the first treated effluent (21) to produce the mixture (25), and
- at least one electrolytic reactor (113) designed to receive the mixture (25) and producing the second treated effluent (27).

3. The system (5) of claim 2, wherein the brine source (115) comprises:
- a salt tank (119), and
- a brine tank (121) connected to the treated water tank (29) and/or to the clean water tank (17) to receive treated water and/or clean water (17), and to the salt tank (119) to receive salt.

4. System (5) according to claim 2 or 3, wherein the electrolytic reactor (113) comprises:
- at least one mixing tank (131) designed to contain the mixture (25),
- at least one voltage source (133) having an anode (135) and a cathode (137), and
- a plurality of plates (139) parallel to each other, some of the plates (139) being electrically connected to the anode (135), and some other of the plates (139) being electrically connected to the cathode (137).

5. System (5) according to claim 4, wherein the electrolytic reactor (113) comprises a recirculation loop (141) designed to extract part of the mixture (25) from the mixing tank (131), and to reinject at least a fraction of said portion of the mixture (25) in the mixing tank (131).

6. System (5) according to claim 5, comprising a pipe (69) connected, upstream, to the recirculation loop (141) and, downstream, to the treated water tank (29), the pipe (69) being designed to convey the second treated effluent (27) from the electrochemical treatment unit (23) to the treated water tank (29).

7. System (5) according to any one of claims 2 to 6, wherein the electrochemical treatment unit (23) further comprises a measuring chamber (X6) connected to the electrolytic reactor (113) and comprising one or more of the following:
- a redox potential sensor (155) for the mixture (25),
- a pH sensor (153) for the mixture (25),
- a conductivity sensor (151) of the mixture (25), and
- a temperature sensor (149) for the mixture (25),
the measuring chamber (X6) preferably comprising a pressure sensor (148).

8. System (5) according to any one of claims 1 to 7, wherein the waste water tank (19) comprises:
- at least one filtration compartment (101) designed to receive black water from the toilets (11), and treated water from the treated water tank (29), and to retain non-liquid residues present in black water, and
- at least one bacteriological treatment compartment (102) designed to receive gray water, and waste water free of said non-liquid residues, and for carrying out said bacteriological treatment.

9. Vehicle (1), particularly rail or road, for public transport, in particular a bus or coach, comprising:
- a toilet cubicle (3) comprising a toilet (11) and at least one sink (9),
- at least one system (5) according to any one of claims 1 to 8.

10. Method of managing water in a vehicle (1), in particular a public transport railway or road vehicle, in particular a bus or coach, comprising the following steps:
- delivery of clean water from a clean water tank (17) to at least one sink (9) of the vehicle (1),
- reception in a waste water tank (19), on the one hand, of gray water from the sink (9), and, on the other hand, of black water from the toilet (11) of the vehicle (1),
- in the waste water tank (19), treatment, in particular bacteriological, of gray water and black water in order to produce a first treated effluent (21),
- in an electrochemical treatment unit (23), receiving the first treated effluent (21), mixing the first treated effluent (21) with at least salt in order to obtain a mixture (25), and electrolysis of the mixture (25) in order to produce a second treated effluent (27), and
- in the treated water tank (29), reception of the second treated effluent (27), and optionally water from the clean water tank (17), and delivery of treated water to the toilets (11), the treated water comprising at least the second treated effluent (27).
